# EUROPÄISCHE PATENTSCHRIFT

(11) **EP 0 868 411 B1**
(45) Veröffentlichungstag und Bekanntmachung des Hinweises auf die Patenterteilung: **21.03.2001**
(21) Anmeldenummer: 96934595.8
(22) Anmeldetag: 09.10.1996
(51) Int. Cl.: C04B 35/569, C04B 35/628

(54) **VERFAHREN ZUR HERSTELLUNG EINES LEITFÄHIGEN SINTERKÖRPERS AUF DER BASIS VON SILICIUMCARBID**
METHOD OF PRODUCING A CONDUCTIVE SILICON CARBIDE-BASED SINTERED COMPACT
PROCEDE DE PRODUCTION D'UN CORPS FRITTE CONDUCTEUR A BASE DE CARBURE DE SILICIUM

(30) Priorität: 10.10.1995 DE 19537714
(43) Veröffentlichungstag der Anmeldung: 07.10.1998
(73) Patentinhaber: INSTITUT FÜR NEUE MATERIALIEN gemeinnützige GmbH, 66123 Saarbrücken (DE)
(72) Erfinder: ASLAN, Mesut, D-66953 Pirmasens (DE); NASS, Rüdiger, D-66292 Riegelsberg (DE); SCHMIDT, Helmut, D-66130 Saarbrücken (DE)
(74) Vertreter: Barz, Peter, Dr.
(86) Internationale Anmeldenummer: EP9604381
(87) Internationale Veröffentlichungsnummer: WO9713734

(56) Entgegenhaltungen:
- EP-A- 0 591 698
- DE-A- 3 630 369
- US-A- 5 322 824

## Beschreibung

Werkstoffe auf der Basis von Siliciumcarbid sind seit langem bekannt und werden für die Herstellung von Bauteilen in vielfältiger Weise genutzt. Sie zeichnen sich durch eine Reihe interessanter Eigenschaften aus, zu denen die niedrige Dichte, die hohe Härte, der niedrige thermische Ausdehnungskoeffizient, die gute Oxidations- und Korrosionsbeständigkeit sowie ein günstiges Kriechverhalten und hohe Wärmeleitfähigkeit zählen.

Außerdem besitzt reines SiC halbleitende Eigenschaften, mit dem entsprechenden elektrischen Verhalten. Von besonderen Interesse ist dabei das drucklos gesinterte SiC, da es die meisten der zuvor genannten Eigenschaften mit einem sehr guten thermomechanischen Verhalten (hohe Festigkeit bei hoher Temperatur) verbindet.

Aus dem Stand der Technik ist bekannt, daß SiC nur unter Verwendung von Sinteradditiven drucklos gesintert werden kann. Als mögliche Sinteradditive werden eine Vielzahl unterschiedlicher Verbindungen und Materialkombinationen beschrieben, zu denen u.a. Metalle wie Aluminium, Eisen, Lithium oder Magnesium sowie Metalloxide wie Aluminiumoxid, Berylliumoxid und Seltenerdmetalloxide zählen. In der technischen Anwendung haben sich jedoch nur Kombinationen aus Kohlenstoff/Bor, Kohlenstoff/Borcarbid und Kohlenstoff/Aluminium als Sinteradditive durchgesetzt (siehe zum Beispiel US-A-5 322 824). Bemerkenswert ist, daß nur geringe Mengen an Sinteradditiven benötigt werden, um eine nahezu vollständige Verdichtung zu erzielen. Die bisher veröffentlichten Werte für Kohlenstoff liegen zwischen 1,5 und 2,6 Gew.-% und für Bor bzw. Borcarbid zwischen 0,3 und 1 Gew.-%, bezogen auf eingesetztes Siliciumcarbid. Der Kohlenstoff wirkt beim Sintern als Reduktionsmittel und reinigt die Kornoberfläche des SiC von SiO_{**2**}. Damit verbunden ist eine Erhöhung der Oberflächenenergie des Pulvers und der Korngrenzdiffusion beim Sintern. Demgegenüber wird Bor an den Korngrenzen eingebaut und erhöht während des Sinterns die Volumendiffusion. Gleichzeitig wirkt es einer Kornvergrößerung entgegen. Damit man sich diese vorteilhaften Eigenschaften der Sinteradditive zunutze machen kann, müssen sie homogen in der grünen Keramik verteilt sein. Die erforderliche Homogenität kann auf verschiedenen Wegen erreicht werden. Häufig unterzieht man die aus SiC und Sinteradditiven bestehende Pulvermischung einer intensiven Naßmahlung in Gegenwart von oberflächenaktiven Substanzen. Eine besonders große Homogenität wird erzielt, wenn die einzelnen SiC-Teilchen direkt mit nanoskaligen Sinteradditiven (z.B. nanoskaligem Ruß) beschichtet werden, wie dies in der DE-A-42 33 626 offenbart wird.

Außerdem ist bekannt, daß für die Herstellung von SiC-Werkstoffen mit guter elektrischer Leitfähigkeit Dotierstoffe benötigt werden. Zu diesen Dotierstoffen zählen u.a. Aluminiumnitrid, Molybdändisilicid, Phosphor, Arsen und Antimon. Durch diese Zusätze wird aber das Sinterverhalten der Keramik ungünstig beeinflußt, so daß eine ausreichende Verdichtung nur durch druckunterstützte Sinterverfahren (Heißpressen, heißisostatisches Pressen) erreicht werden kann. Auf diesen Wegen hergestellte SiC-Keramiken besitzen aber noch immer eine relativ hohe Porosität und sind an der Luft bei hoher Temperatur nur eingeschränkt oxidationsstabil.

Aufgabe der vorliegenden Erfindung ist demgemäß die Bereitstellung von SiC-Werkstoffen mit guten elektrischen Eigenschaften, insbesondere guter elektrischer Leitfähigkeit, guter Oxidationsbeständigkeit und hoher Festigkeit durch druckloses Sintern.

Überraschenderweise wurde gefunden, daß diese Aufgabe mit dem Stoffsystem (α-)SiC/B_{**4**}C/Kohlenstoff gelöst werden kann, wenn die Herstellung der Grünkörper nach dem in der DE-A-42 33 626 beschriebenen Verfahren erfolgt und die Grünkörper einem mehrstufigen Sinterverfahren, das zumindest teilweise in Anwesenheit von Stickstoff durchgeführt wird, unterzogen werden.

Gegenstand der vorliegenden Erfindung ist somit ein Verfahren zur Herstellung eines elektrisch leitfähigen Sinterkörpers auf der Basis von Siliciumcarbid, bei dem man
a) gegebenenfalls mit einem Oberflächenmodifizierungsmittel vorbehandelte (vorzugsweise α-)Siliciumcarbid-Teilchen in einem wäßrigen und/oder organischen Medium dispergiert und durch Einstellen des pH-Wertes der erhaltenen Dispersion positive oder negative Oberflächenladungen auf den Siliciumcarbid-Teilchen erzeugt;
b) Ruß und Borcarbid als Sinteradditive zumischt, wobei zumindest die Ruß-Teilchen eine zur Oberflächenladung der Siliciumcarbid-Teilchen entgegengesetzte Oberflächenladung aufweisen und wobei das Borcarbid ganz oder teilweise auch zu einem späteren Zeitpunkt (Stufe c')) zugegeben werden kann;
c) den nach Stufe b) erhaltenen Schlicker direkt zu einem Grünkörper formt oder
c') aus dem erhaltenen Schlicker ein Sinterpulver gewinnt und dieses zu einem Grünkörper formt, wobei das obige Borcarbid (ganz oder teilweise) auch diesem Sinterpulver zugegeben werden kann; und
d) den erhaltenen Grünkörper drucklos zu einem Sinterkörper sintert,
wobei das Verfahren dadurch gekennzeichnet ist, daß die Stufe d) in im wesentlichen drei aufeinanderfolgenden Schritten, nämlich (i) Vorerhitzen auf 1200-1900°C, (ii) Sintern bei 1900-2200°C und (iii) Nachglühen bei 2150-1850°C und anschließendes Abkühlen auf Umgebungstemperatur, durchgeführt wird, und der Schritt (i) in einer Stickstoff-haltigen Atmosphäre, der Schritt (ii) in einer Edelgas- (vorzugsweise Argon-) Atmosphäre und der Schritt (iii) in einer Stickstoff- und/oder Kohlenmonoxid-haltigen Atmosphäre erfolgt.

In einer Abwandlung dieses Verfahrens wird der nach Stufe (b) erhaltene Schlicker auf ein sinterbeständiges Substrat aufgetragen und getrocknet und das so beschichtete Substrat gemäß Stufe d) gesintert.

Wie bereits oben erwähnt, erfolgen die Stufen (a) bis (c) des erfindungsgemäßen Verfahrens wie in der DE-A-42 33 626, auf die hiermit hinsichtlich Einzelheiten ausdrücklich Bezug genommen wird, beschrieben.

Das Siliciumcarbid-Pulver wird in Stufe (a) in Wasser und/oder organischen Medien suspendiert.

Als organische Dispergiermedien eignen sich vor allem mit Wasser mischbare organische Lösungsmittel wie z.B. Alkohole, Ester, Ketone, Dimethylformamid und Dimethylsulfoxid.

Die an der Oberfläche der SiC-Teilchen vorhandenen Si-OH-Gruppen werden in Gegenwart von Protonen oder Hydroxylionen in geladene Gruppen Si-OH_{**2**}^{**+**} bzw. Si-O^{**-**} überführt, die eine elektrostatische Abstoßung der SiC-Feinteilchen und damit eine feindisperse Suspension bewirken.

Vorzugsweise wird die Ausbildung negativer oder positiver Oberflächenladungen durch Zusatz einer Säure oder Base bewirkt bzw. unterstützt. Für diesen Zweck geeignete Säuren sind z.B. anorganische Säuren wie HCl, HNO_{**3**}, H_{**3**}PO_{**4**}, H_{**2**}SO_{**4**} sowie organische Carbonsäuren wie Essigsäure, Propionsäure, Citronensäure, Bernsteinsäure, Oxalsäure und Benzoesäure. Geeignete Basen sind z.B. NH_{**3**}, NaOH, KOH, Ca(OH)_{**2**} sowie primäre, sekundäre und tertiäre, aliphatische und aromatische Amine und Tetraalkylammoniumhydroxide. Ebenso können saure oder basiche Polyelektrolyte wie beispielsweise Polyacrylsäure, Polymethacrylsäure, Polysulfonsäuren, Polcarbonsäuren und Salze (z.B. mit Na^{**+**} oder NH_{**4**}^{**+**} als Kationen) dieser Verbindungen eingesetzt werden.

Die auf diese Weise erzeugten Oberflächenladungen sind als sogenanntes Zeta-Potential meßbar. Das Zeta-Potential ist pH-abhängig und in Relation zum isoelektrischen Punkt des jeweiligen Materials (z.B. des SiC) entweder positiv oder negativ. Durch die elektrostatische Aufladung mit gleicher Polarität bleiben die dispergierten Einzelteilchen stabil in Suspension.

Gemäß einer bevorzugten Ausführungsform der vorliegenden Erfindung wird das SiC-Pulver vor der Ausbildung der Oberflächenladungen einer Oberflächenmodifizierung unterzogen. Erfindungsgemäß wird diese Oberflächenmodifizierung so durchgeführt, daß man das SiC mit einem Oberflächenmodifizierungsmittel behandelt, das funktionelle Gruppen aufweist, die durch Einstellen eines geeigneten pH-Wertes in negativ oder positiv geladene Gruppen überführt werden können.

Als Oberflächenmodifizierungsmittel eignen sich z.B. Silane, Säurechloride, Carbonsäureamide, Carbonsäureanhydride und Carbonsäureester sowie organische Polyelektrolyte wie Polyacrylsäure, Polymethacrylsäure, Polysulfonsäuren, Polycarbonsäuren und Salze derselben.

Beispiele für verwendbare Silane sind Mercaptopropyltrimethoxysilan, 3-(Trimethoxysilyl)propylmethacrylat, 3-(Triethoxysilyl)propylbernsteinsäureanhydrid, Cyanoethyltrimethoxysilan, 3-Thiocyanatopropyltriethoxysilan, 3-(2-(Aminoethylamino)propyltrimethoxysilan, 3-Aminopropyltriethoxysilan, 7-Oct-1-enyltrimethoxysilan, Phenyltrimethoxysilan, n-Butyltrimethoxysilan, n-Octyltrimethoxysilan, n-Decyltrimethoxysilan, n-Dodecyltriethoxysilan, n-Hexadecyltrimethoxysilan, n-octadecyltrimethoxysilan, n-Octadecyltrichlorsilan, Dichlormethylvinylsilan, Diethoxymethylvinylsilan, Dimethyloctadecylmethoxysilan, tert-Butyldimethylchlorsilanmethyldisilazan, Diethoxydimethylsilan, Diethyltrimethylsilylphosphit, 2-(Diphenylmethylsilyl)ethanol, Diphenylsilandiol, Ethyl (diphenylmethylsilyl)acetat,Ethyl-2,2,5,5-tetramethyl-1,2,5-azadisilolidin-1-acetat, Ethyltriethoxysilan, Hydroxytriphenylsilan, Trimethylethoxysilan, Trimethylsilylacetat, Allyldimethylchlorsilan, (3-Cyanopropyl)dimethylchlorsilan und Vinyltriethoxysilan.

Beispiele für verwendbare Säurechloride sind Acetylchlorid, Propanoylchlorid, Butanoylchlorid und Valerylchlorid. Verwendbare Carbonsäureanhydride sind z.B. Acetanhydrid und Propionsäureanhydrid. Als Carbonsäureester eignet sich z.B. Essigsäureethylester und als Carbonsäureamid Acetamid.

Zur Oberflächenmodifizierung werden die SiC-Teilchen gewöhnlich in einem unpolaren, aprotischen Lösungsmittel, z.B. einem aliphatischen oder aromatischen Kohlenwasserstoff wie Hexan oder Toluol oder einem Ether wie Diethylether oder THF suspendiert und mit dem Oberflächenmodifizierungsmittel versetzt.

Anschließend kann das Lösungsmittel abgezogen und das oberflächenmodifizierte Material in einem wäßrigen oder organischen Medium resuspendiert werden, worauf man durch Einstellen eines geeigneten pH-Wertes positive oder negative Oberflächenladungen auf dem modifizierten Material erzeugt. Enthält das Oberflächenmodifizierungsmittel z.B. basische Gruppen, wie dies bei Amino- oder Mercaptosilanen der Fall ist, können durch Einstellen eines sauren pH positive Oberflächenladungen erzeugt werden. Enthält dagegen das Oberflächenmodifizierungsmittel saure Gruppen, wie dies bei Carboxysilanen der Fall ist, werden durch Einstellen eines basischen pH negative Oberflächenladungen erzeugt.

Das im erfindungsgemäßen Verfahren eingesetzte (α-)SiC weist vorzugsweise eine Korngröße von 0,005 bis 100 µm, insbesondere 0,01 bis 50 µm, besonders bevorzugt 0,05 bis 5 µm auf und kann sowohl als SiC-Pulver als auch in Form von Whiskern, Plateletts oder Fasern vorliegen.

Die Korngröße des ersten Sinteradditivs Kohlenstoff (Ruß) richtet sich nach der Feinheit der SiC-Teilchen, wobei die Kohlenstoff-Teilchen umso feiner sein sollten, je feiner die SiC-Teilchen sind. Im allgemeinen hat der Kohlenstoff eine Korngröße von 1 bis 100 nm, vorzugsweise 5 bis 80 nm, besonders bevorzugt 5 bis 50 nm. Die Korngröße des zweiten Sinteradditivs B_{**4**}C beträgt gewöhnlich 0,0001 bis 10 µm, vorzugsweise 0,0005 bis 5 µm, besonders bevorzugt 0,01 bis 1 µm.

Im erfindungsgemäßen Verfahren wird zumindest das Sinteradditiv Ruß dem SiC-Schlicker in einem Zustand zugemischt, in dem die Kohlenstoff-Teilchen Oberflächenladungen mit einer Polarität aufweisen, die derjenigen der Oberflächenladung auf den SiC-Teilchen entgegengesetzt ist. Auf diese Weise ist eine gleichmäßige Verteilung des Sinteradditivs Ruß auf der Oberfläche der SiC-Teilchen möglich.

Die dem SiC entgegengesetzte elektrostatische Aufladung des Sinteradditivs Ruß kann z.B. dadurch erreicht werden, daß Ruß-Typen mit sauren oder basischen Oberflächengruppen eingesetzt werden. Basische Ruß-Typen erhält man z.B. im Furnace-Ruß-Verfahren in reduzierender Atmosphäre. Saure Ruß-Typen entstehen z.B. im Gasruß-Verfahren in oxidierender Atmosphäre. Handelsübliche basische Ruße sind z.B. PRINTEX A, G, L, L6 und P, PRINTEX 3, 25, 30, 40, 45, 55, 60, 75, 80, 85, 90, 95, 200 und 300 von DEGUSSA. Handelsübliche saure Ruße sind z.B. Farbruß FW 1, FW 2, FW 2V, FW 18, FW 200, S 160 und S 170, Spezialschwarz 4, 4A, 5, 6, 100, 250, 350 und 550, PRINTEX 150T, U, V, 140 U und 140 V von DEGUSSA.

Beim Vermischen der SiC-Suspension und des Sinteradditivs (Ruß) haftet der letztere aufgrund der starken elektrostatischen Anziehung stabil auf der Oberfläche der SiC-Teilchen. Im erfindungsgemäßen Verfahren wird der Ruß stets mit einer dem SiC entgegengesetzten Oberflächenladung versehen, da andernfalls keine stabile Ablagerung und gleichmäßige Verteilung auf der Oberfläche der SiC-Teilchen möglich ist. Die zweite Sinteradditiv-Komponente, d.h. B_{**4**}C, kann dem Schlicker gegebenenfalls ungeladen zugemischt werden. Gegebenenfalls kann das B_{**4**}C auch erst später, nach Gewinnung eines Sinterpulvers und erneutem Redispergieren mit Hilfe von nicht-ionischen Tensiden, zugegeben werden.

Die Zusatzmenge an Sinteradditiven, bezogen auf das SiC, beträgt gewöhnlich 0,1 bis 5 Gew.-%, vorzugsweise 0,5 bis 3 Gew.-% Kohlenstoff (Ruß) und 0,05 bis 5 Gew.-%, vorzugsweise 0,1 bis 3 Gew.-% und insbesondere 0,2 bis 2 Gew.-% B_{**4**}C.

Der nach Stufe (b) des erfindungsgemäßen Verfahrens erhaltene keramische Schlicker, der im allgemeinen einen Feststoffgehalt von 10 bis 60 Volumenprozent aufweist, wird auf übliche Weise zu einem Grünkörper weiterverarbeitet. Er kann z.B. durch Foliengießen, Schlickergießen, Druckgießen, Spritzgießen, Elektrophorese, Extrusion, Heißgießen, Gelcasting, Gefrierguß, Gefrierspritzguß oder Zentrifugieren direkt zu einem Grünkörper geformt werden.

Mit diesem Schlicker können aber mit gängigen Naßbeschichtungstechniken wie Tauchen, Spritzen, Spin-coating oder Rakeln auch Beschichtungen hergestellt werden.

Alternativ kann man aus dem Schlicker ein Sinterpulver gewinnen, z.B. durch Filtration, Abdampfen des Dispergiermediums und Sprühtrocknen oder Gefriertrocknen. Das erhaltene Sinterpulver wird dann entweder als solches zu einem Grünkörper gepreßt, oder aber man redispergiert das Sinterpulver, vorzugsweise unter Verwendung eines Tensids als Dispergierhilfe, und verarbeitet dann die Suspension nach einem der oben genannten Formverfahren zu einem Grünkörper. Als Dispergierhilfen eignen sich in dieser Ausführungsform z.B. anorganische Säuren, wie HCl, HNO_{**3**} und H_{**3**}PO_{**4**}; organische Säuren, wie Essigsäure, Propionsäure, Citronensäure und Bernsteinsäure; anorganische Basen, wie NaOH, KOH und Ca(OH)_{**2**}; organische Basen, wie primäre, sekundäre und tertiäre Amine sowie Tetraalkylammoniumhydroxide; organische Polyelektrolyte, wie Polyacrylsäure, Polymethacrylsäure, Polysulfonsäuren, Polycarbonsäuren, Salze (z.B. Na oder NH_{**4**}) dieser Verbindungen, N,N-Dialkylimidazoline und N-Alkylpyridiniumsalze; oder nicht-ionische Tenside, wie Polyethylenoxid, Fettsäurealkylolamide, Saccharosefettsäureester, Trialkylaminoxide und Fettsäureester von Polyhydroxyverbindungen.

Der Grünkörper bzw. die Schicht wird schließlich zu einem Sinterkörper gesintert. Während man durch übliches Sintern des Grünkörpers zu einer SiC-Keramik gelangt, die viele vorteilhafte Eigenschaften aufweist und demzufolge auf vielen Gebieten Anwendung findet, wie sie z.B. in der DE-A-42 33 626 angegeben sind, verfügt der so erhaltene SiC-Sinterkörper über keine elektrische Leitfähigkeit und kann somit nicht auf Gebieten eingesetzt werden, in denen eine gute elektrische Leitfähigkeit erforderlich ist, wie z.B. zur Herstellung von Glühzündern.

Erfindungsgemäß wurde gefunden, daß es möglich ist, dem SiC-Sinterkörper ohne Beeinträchtigung seiner übrigen vorteilhaften Eigenschaften auch eine gute elektrische Leitfähigkeit (spezifischer Widerstand üblicherweise 0,5 bis 10 Ω x cm) zu verleihen, wenn man die Sinterstufe (d) unter speziellen Bedingungen durchführt.

Erfindungsgemäß wird die Sinterstufe in im wesentlichen drei Schritten oder Phasen durchgeführt, nämlich
(i) einer (gegebenenfalls in mehreren Stufen durchgeführten) Vorerhitzungsphase bei einer Endtemperatur von 1200-1900°C, vorzugsweise 1500-1850°C, insbesondere 1600 - 1800°C und besonders bevorzugt 1650-1750°C;
(ii) einer Sinterphase bei einer Temperatur von 1900-2200°C, vorzugsweise 1950-2150°C und besonders bevorzugt 2000 - 2100°C; und
(iii) einer Nachglühphase bei einer Temperatur nicht oberhalb und vorzugsweise unterhalb der Sintertempertur, d.h. bei einer Temperatur von 2150-1850°C, vorzugsweise 2100-1950°C und besonders bevorzugt 2100-2000°C, gefolgt von dem Abkühlen des Sinterkörpers auf Umgebungstemperatur.

Neben der Temperatur ist die Gasatmosphäre, in der die einzelnen Sinterphasen durchgeführt werden, ein weiteres wichtiges Merkmal der vorliegenden Erfindung. Die Gasatmosphäre in den einzelnen Phasen setzt sich erfindungsgemäß wie folgt zusammen:
Phase (i): (nicht-oxidierende) Stickstoff-haltige Atmosphäre, die vorzugsweise mindestens 50, insbesondere mindestens 75 und besonders bevorzugt mindestens 90 Volumenprozent Stickstoff enthält, wobei sich der Rest aus einem oder mehreren Gasen zusammensetzt, die unter der angewendeten Temperatur gegenüber Siliciumcarbid (und Siliciumnitrid) inert sind. Bei diesen Gasen handelt es sich vorzugsweise um Edelgase, insbesondere Argon. Üblicherweise wird eine Atmosphäre aus 100% N_{**2**} eingesetzt.
Phase (ii) : Edelgas-Atmosphäre, insbesondereArgon-Atmosphäre. In dieser Atmosphäre können auch andere Inertgase (oder Stickstoff) vorhanden sein, obwohl dies nicht bevorzugt ist.
Phase (iii): (nicht-oxidierende) Stickstoff- und/oder Kohlenmonoxid-haltige Atmosphäre. Neben Stickstoff und/oder Kohlenmonoxid können Gase vorhanden sein, wie sie auch in Phase (i) anwesend sein können. Obwohl Atmosphären aus 100% Stickstoff bzw. Kohlenmonoxid einsetzbar sind, sind besonders bevorzugte Atmosphären solche, in denen Stickstoff in Mischung mit CO und/ oder Edelgas (insbesondere Argon) vorliegt. In derartigen Mischungen macht der Stickstoff vorzugsweise mindestens 75, insbesondere mindestens 90 und besonders bevorzugt mindestens 95 Volumenprozent der Mischung aus.

In den einzelnen Phasen (i) bis (iii) wird der Grünkörper bzw. Sinterkörper zunächst auf die angegebene Temperatur aufgeheizt bzw. abgekühlt und dann für eine bestimmte Zeitspanne bei dieser Temperatur gehalten (sogenannte Haltezeit) . Die optimale Haltezeit ist eine Funktion vieler Faktoren, z.B. Temperatur, Zusammensetzung der Gasatmosphäre, Gestalt (insbesondere Dicke) des Grün- bzw. Sinterkörpers, Konstruktion der Heizvorrichtung usw. Üblicherweise liegt die Haltezeit im Bereich von 5 Minuten bis 24 Stunden, noch häufiger von 10 Minuten bis 12 Stunden.

Mit dem erfindungsgemäßen Verfahren kann eine SiC-Keramik durch druckloses Sintern hergestellt werden, die üblicherweise die folgenden Eigenschaften aufweist:
- Dichte > 85% der Theorie
- spezifischer Widerstand von 0,5 bis 10 Ω x cm (z.B. über die Bedingungen in Stufe (d) einstellbar, siehe Beispiele)
- gute Oxidationsbeständigkeit (aufgrund geschlossener, fein verteilter Poren)
- feinkörniges, gleichmäßiges Gefüge mit mittlerer Korngröße von etwa 5 µm
- hohe Festigkeit (> 300 MPa).

Die erfindungsgemäß herstellbaren Sinterkörper finden Anwendung in allen Gebieten, in denen eine elektrische Beheizung eingesetzt wird. Eine besonders bevorzugte Verwendung ist diejenige in Form eines Glühzünders. Der Widerstand eines derartigen Zünders kann über seine Geometrie eingestellt werden. Aus erfindungsgemäßen Sinterkörpern hergestellte Glühzünder können z.B. bei 220 Volt betrieben und sehr klein dimensioniert werden. Die erfindungsgemäß herstellbaren Sinterkörper eignen sich aber auch zur Verwendung als großvolumige Bauteile, z.B. als SiC-Waben, die beispielsweise als Dieselrußfilter Anwendung finden können. Darüber hinaus kann der im erfindungsgemäßen Verfahren erhaltene Schlicker auf (sinterbeständige) Substrate aufgetragen und dann wie ein Grünkörper weiterverarbeitet werden, wodurch elektrisch leitfähige
Schichten auf diesen Substraten erzeugt werden können.

Die folgenden Beispiele dienen der weiteren Erläuterung der vorliegenden Erfindung, ohne dieselbe zu beschränken.

### Herstellungsbeispiel 1

### Elektrostatische Beschichtung von SiC-Pulvern mit nanodispersem Kohlenstoff:

In 200 ml Wasser werden 3 g Ruß (PRINTEX 90 von DEGUSSA) bei pH 5-6 in einer Rührwerk-Kugelmühle dispergiert. Zu dieser Suspension werden 150 g SiC-Pulver gegeben und 2 Stunden unter Mahlen dispergiert. Anschließend wird abgesetzt und die Flüssigkeit über eine Filterpresse abfiltriert. Das erhaltene Pulver wird 10 Stunden bei 90°C getrocknet.

### Herstellungsbeispiel 2

### Herstellung eines wäßrigen SiC-Schlickers aus elektrostatisch beschichtetem Pulver:

150 g des nach Herstellungsbeispiel 1 hergestellten SiC-Pulvers und 0,97 g B_{**4**}C werden unter Zugabe von 2 Gew.-% einer nicht-ionischen Dispergierhilfe (TWEEN 80 von ICI) in 70 ml Wasser in einer Rührwerk-Kugelmühle dispergiert. Die erhaltene Suspension enthält 40 Vol.-% SiC, 2 Gew.-% Ruß und 0,65 Gew.-% B_{**4**}C. Die Viskosität ist < 15 mPa.s.

### Herstellungsbeispiel 3

### Herstellung von Grünkörpern:

Aus der nach Herstellungsbeispiel 2 hergestellten Suspension wird nach Absetzen der Mahlkugeln durch Schlickergießen ein Grünkörper hergestellt und getrocknet. Dieser hat eine Gründichte ≥ 60% d.Th., eine sehr enge Porengrößenverteilung um 100 nm und zeichnet sich durch eine homogene Kohlenstoffverteilung über die gesamte Scherbendicke (≤ 5 cm) aus.

### Herstellungsbeispiel 4

### Oberflächenmodifizierung von SiC-Pulvern mit Silanen:

In 100 ml Toluol werden die in der folgenden Tabelle genannten Organoalkoxysilane gelöst. Zu der Lösung werden unter ständigem Rühren 50 g SiC-Pulver gegeben. Nach beendeter Zugabe wird das Gemisch unter Rückfluß erhitzt. Nach einer Reaktionszeit von 5 Stunden wird die heiße Suspension filtriert und der Filterrückstand mit Toluol gewaschen. Das feuchte Pulver wird anschließend 12 Stunden bei 115°C getrocknet.

**TABELLE**

| Silane | Menge (g) |
|---|---|
| Mercaptopropyltrimethoxysilan | 1,047 |
| 3-(Trimethoxysilyl)propylmethacrylat | 1,324 |
| 3-(Triethoxysilyl)propylbernsteinsäureanhydrid | 1,621 |
| Cyanoethyltrimethoxysilan | 0,933 |
| 3-Thiocyanatopropyltriethoxysilan | 1,179 |
| 3-(2-Aminoethylamino)propyltrimethoxysilan | 1,184 |
| 3-Aminopropyltriethoxysilan | 1,179 |
| 7-Oct-1-enyltrimethoxysilan | 1,239 |
| Phenyltrimethoxysilan | 1,057 |
| n-Butyltrimethoxysilan | 0,951 |
| n-Octyltrimethoxysilan | 1,250 |
| n-Decyltrimethoxysilan | 1,397 |
| n-Dodecyltriethoxysilan | 1,774 |
| n-Hexadecyltrimethoxysilan | 1,736 |
| n-Octadecyltrimethoxysilan | 1,998 |
| n-Octadecyltrichlorsilan | 2,066 |
| Dichlormethylvinylsilan | 0,751 |
| Diethoxymethylvinylsilan | 0,855 |
| Dimethyloctadecylmethoxysilan | 1,828 |

### BEISPIELE 1 BIS 4

Aus einem Schlicker mit der Zusammensetzung 97,87 Gew.-% α-SiC mit einer spezifischen Oberfläche von etwa 15 m^{**2**}/g, 0,13 Gew.-% B_{**4**}C mit einer spezifischen Oberfläche von etwa 15 m^{**2**}/g und 2 Gew.-% Ruß mit einer spezifischen Oberfläche von 250 - 300 m^{**2**}/g, der elektrostatisch auf dem SiC abgeschieden wurde, wurde über Schlickergießen bzw. Schlickerdruckgießen (Druck im Bereich von 5-50 bar) ein Grünkörper mit den Abmessungen 100 x 100 x 5 mm hergestellt. Der Grünkörper besaß eine Dichte von > 55% der Theorie und eine Porenverteilung im Bereich von 40 bis 100 nm.

Für die Erzeugung einer elektrisch leitenden SiC-Keramik wurde nach folgendem Sinterprogramm gearbeitet:
(i) Aufheizen auf 600°C mit 3 K/Minute, Haltezeit 30 Minuten, weiteres Aufheizen auf 1700°C mit 15 K/Minute, Haltezeit 60 bis 120 Minuten, jeweils in reiner Stickstoffatmosphäre.
(ii) Umschalten auf reine Argon-Atmosphäre und dann Aufheizen mit 15 K/Minute auf die im folgenden angegebene Temperatur, mit der im folgenden angegebenen Haltezeit bei dieser Temperatur.
(iii) Anschließendes Nachglühen unter den im folgenden angegebenen Bedingungen und Abkühlen auf Raumtemperatur mit 15 K/Minute.

| BEISPIEL 1 | |
|---|---|
| Sintertemperatur | 2100°C |
| Haltezeit | 30 Minuten |
| Nachglühphase | Temperatur 2100°C, Haltezeit 60 Minuten; Atmosphäre N_{**2**} mit 5 Volumenprozent CO |
| Spezifischer Widerstand | 2 Ω x cm |
| Sinterdichte | 2,87 g/cm^{**3**} |
| Festigkeit | > 300 MPa |
| mittlere Porengröße | etwa 1,5 µm. |

| BEISPIEL 2 | |
|---|---|
| Sintertemperatur | 2120°C |
| Haltezeit | 30 Minuten |
| Nachglühphase | Temperatur 2100°C; Haltezeit 60 Minuten; Atmosphäre N_{**2**} mit 5 Volumenprozent CO |
| Spezifischer Widerstand | 4,5 Ω x cm |
| Sinterdichte | 2,90 g/cm^{**3**} |
| Festigkeit | > 350 MPa |
| mittlere Porengröße | etwa 2 µm. |

| BEISPIEL 3 | |
|---|---|
| Sintertemperatur | 2130°C |
| Haltezeit | 30 Minuten |
| Nachglühphase | Temperatur 2100°C; Haltezeit 60 Minuten; Atmosphäre N_{**2**} mit 5 Volumenprozent CO |
| Spezifischer Widerstand | 7 Ω x cm |
| Sinterdichte | 2,93 g/cm^{**3**} |
| Festigkeit | > 450 MPa |
| mittlere Porengröße | etwa 2 µm. |

| BEISPIEL 4 | |
|---|---|
| Sintertemperatur | 2125°C |
| Haltezeit | 30 Minuten |
| Nachglühphase | Temperatur 2100°C; Haltezeit 60 Minuten; Atmosphäre N_{**2**} mit 5 Volumenprozent CO |
| Spezifischer Widerstand | 5,5 Ω x cm |
| Sinterdichte | 2,92 g/cm^{**3**} |
| Festigkeit | > 400 MPa |
| mittlere Porengröße | etwa 2 µm. |

### ANWENDUNGSBEISPIEL

### Herstellung eines Glühzünders:

Aus einer gemäß Beispiel 4 hergestellten Platte (spezifischer Widerstand 5,5 Ω x cm) wurde mechanisch ein Hantel-förmiger Glühzünder mit einer Gesamtlänge von 60 mm (Länge der beiden Endstücke 20 mm) und einer Breite von 4 mm bzw. 2 mm hergestellt (die Dicke betrug 1 mm).

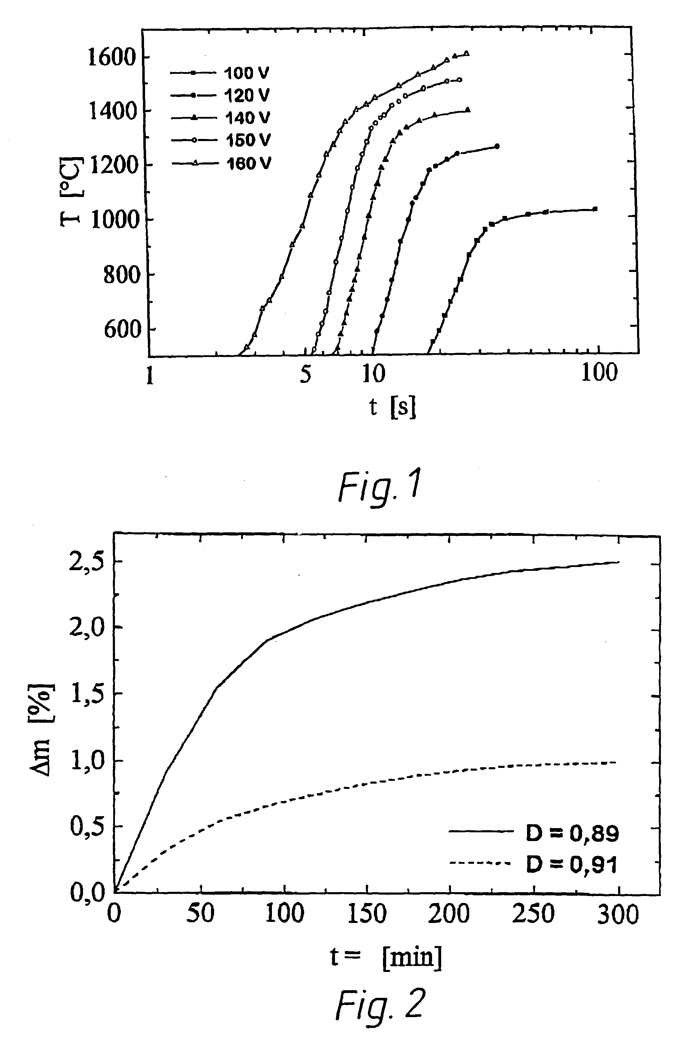

Der Zünder wurde an seinen Enden kontaktiert und mit Spannungen von 100 bis 160V betrieben. Dabei stellten sich die in Figur 1 gezeigten Oberflächentemperaturen ein (R_{**0**} = 1710 Ω).

Zur Ermittlung des zyklischen Ermüdungs- und Alterungsverhaltens wurde der Zünder mit 100.000 Schaltzyklen betrieben. Auch nach dem letzten Schaltzyklus konnten keine Veränderungen der Werkstoffeigenschaften beobachtet werden.

Zur Bestimmung der Oxidationsbeständigkeit wurde der Glühzünder in Luft auf 1300°C aufgeheizt und 300 Minuten lang bei dieser Temperatur gehalten. Es ergab sich eine parabolische Gewichtszunahme, die mit steigender Dichte abnahm, wobei sich nach ca. 200 bis 250 Minuten ein nahezu konstanter Wert einstellte (siehe Figur 2).

## Patentansprüche

1. Verfahren zur Herstellung eines elektrisch leitfähigen Sinterkörpers auf der Basis von Siliciumcarbid, bei dem man
(a) gegebenenfalls mit einem Oberflächenmodifizierungsmittel vorbehandelte Siliciumcarbid-Teilchen in einem wäßrigen und/oder organischen Medium dispergiert und durch Einstellen des pH-Wertes der erhaltenen Dispersion positive oder negative Oberflächenladungen auf den Siliciumcarbid-Teilchen erzeugt;
(b) Ruß und Borcarbid als Sinteradditive zumischt, wobei zumindest die Ruß-Teilchen eine zur Oberflächenladung der Siliciumcarbid-Teilchen entgegengesetzte Oberflächenladung aufweisen und wobei das Borcarbid ganz oder teilweise auch zu einem späteren Zeitpunkt, d.h. in Stufe (c'), zugegeben werden kann;
(c) den so erhaltenen Schlicker direkt zu einem Grünkörper formt oder
(c') aus dem so erhaltenen Schlicker ein Sinterpulver gewinnt und dieses zu einem Grünkörper formt, wobei das obige Borcarbid auch diesem Sinterpulver zugegeben werden kann; und
(d) den erhaltenen Grünkörper drucklos zu einem Sinterkörper sintert,
dadurch gekennzeichnet, daß die Stufe (d) in im wesentlichen drei aufeinanderfolgenden Schritten, nämlich (i) Vorerhitzen auf 1200-1900°C, (ii) Sintern bei 1900-2200°C und (iii) Nachglühen bei 2150-1850°C und anschließendes Abkühlen auf Umgebungstemperatur, durchgeführt wird und der Schritt (i) in einer Stickstoff-haltigen Atmosphäre, der Schritt (ii) in einer Edelgas-Atmosphäre und der Schritt (iii) in einer Stickstoff- und/oder Kohlenmonoxid-haltigen Atmosphäre erfolgt.

2. Verfahren nach Anspruch 1, dadurch gekennzeichnet, daß in Schritt (i) die Atmosphäre aus Stickstoff, gegebenenfalls in Mischung mit nicht mehr als 50 Volumenprozent Argon, besteht.

3. Verfahren nach irgendeinem der Ansprüche 1 und 2, dadurch gekennzeichnet, daß in Schritt (iii) die Atmosphäre aus Stickstoff und/oder Kohlenmonoxid, gegebenenfalls in Mischung mit Argon, besteht.

4. Verfahren nach irgendeinem der Ansprüche 1 bis 3, dadurch gekennzeichnet, daß die Atmosphäre in Schritt (i) aus reinem Stickstoff besteht und/oder in Schritt (iii) aus mindestens 50 Volumenprozent Stickstoff in Mischung mit Kohlenmonoxid und/oder Argon besteht.

5. Verfahren nach irgendeinem der Ansprüche 1 bis 4, dadurch gekennzeichnet, daß die Temperatur in Schritt (i) 1500-1850°C beträgt und/oder in Schritt (ii) 1950-2150°C beträgt und/oder in Schritt (iii) beim Nachglühen 2000-2100°C beträgt.

6. Verfahren nach irgendeinem der Ansprüche 1 bis 5, dadurch gekennzeichnet, daß die Haltezeiten bei den angegebenen Temperaturen in den Schritten (i) bis (iii) jeweils 5 Minuten bis 24 Stunden betragen.

7. Verfahren nach irgendeinem der Ansprüche 1 bis 6, dadurch gekennzeichnet, daß in Stufe (a) Siliciumcarbid-Teilchen eingesetzt werden, die mit einem Oberflächenmodifizierungsmittel behandelt wurden, das funktionelle Gruppen aufweist, die durch Einstellen eines geeigneten pH-Wertes in negativ oder positiv geladene Gruppen überführt werden können.

8. Verfahren nach Anspruch 7, dadurch gekennzeichnet, daß das Oberflächenmodifizierungsmittel aus Silanen, Säurechloriden, Carbonsäureamiden, Carbonsäureanhydriden, Carbonsäureestern oder organischen Polyelektrolyten ausgewählt wird.

9. Verfahren nach irgendeinem der Ansprüche 1 bis 8, dadurch gekennzeichnet, daß als Siliciumcarbid α-SiC eingesetzt wird.

10. Sinterkörper mit einem spezifischen Widerstand von 0,5 bis 10 Ω x cm, erhältlich nach dem Verfahren gemäß irgendeinem der Ansprüche 1 bis 9.

11. Sinterkörper nach Anspruch 10 in Form eines Glühzünders, eines elektrisch beheizbaren Bauteils oder eines Dieselrußfilters.

12. Verwendung des Sinterkörpers nach Anspruch 10 zur Erzeugung von Wärme durch Anlegen einer elektrischen Spannung daran.

13. Abwandlung des Verfahrens nach Anspruch 1, dadurch gekennzeichnet, daß man den in Stufe (b) erhaltenen Schlikker auf ein sinterbeständiges Substrat aufträgt und trocknet und das so beschichtete Substrat gemäß Stufe (d) sintert.

## Claims

1. Process for producing an electrically conductive sintered body based on silicon carbide, in which
a) silicon carbide particles, optionally pretreated with a surface modifier, are dispersed in an aqueous and/or organic medium and positive or negative surface charges are generated on the silicon carbide particles by adjustment of the pH of the dispersion obtained;
b) carbon black and boron carbide are mixed in as sintering aids, where at least the carbon black particles have a surface charge opposite to the surface charge of the silicon carbide particles and the boron carbide can also be added, completely or in part, at a later point in time, i.e. in stage (c');
c) the slip thus obtained is shaped directly to form a green body or
c') a sinterable powder is isolated from the slip obtained and is shaped to form a green body, where the above boron carbide can also be added to this sinterable powder; and
d) the green body obtained is subjected to pressureless sintering to form a sintered body,
characterized in that said stage (d) is carried out in essentially three successive steps, namely (i) preheating to 1200-1900°C, (ii) sintering at 1900-2200°C and (iii) post-heating at 2150-1850°C and subsequent cooling to ambient temperature, and said step (i) is carried out in a nitrogen-containing atmosphere, said step (ii) is carried out in a noble gas atmosphere and said step (iii) is carried out in an atmosphere containing nitrogen and/or carbon monoxide.

2. Process according to Claim 1, characterized in that, in step (i), the atmosphere comprises nitrogen, optionally in admixture with not more than 50% by volume of argon.

3. Process according to either Claim 1 or 2, characterized in that in step (iii) the atmosphere comprises nitrogen and/or carbon monoxide, optionally in admixture with argon.

4. Process according to any of Claims 1 to 3, characterized in that the atmosphere in step (i) consists of pure nitrogen and/or in step (iii) consists of at least 50% by volume of nitrogen in admixture with carbon monoxide and/or argon.

5. Process according to any of Claims 1 to 4, characterized in that the temperature in step (i) is 1500-1850°C and/or in step (ii) is 1950-2150°C and/or in step (iii) is 2000-2100°C during post-heating.

6. Process according to any of Claims 1 to 5, characterized in that the hold times at the temperatures indicated are from 5 minutes to 24 hours in each of the steps (i) to (iii).

7. Process according to any of Claims 1 to 6, characterized in that in stage (a) use is made of silicon carbide particles which have been treated with a surface modifier having functional groups which can be converted into negatively or positively charged groups by establishing an appropriate pH.

8. Process according to Claim 7, characterized in that the surface modifier is selected from silanes, acid chlorides, carboxamides, carboxylic anhydrides, carboxylic esters or organic polyelectrolytes.

9. Process according to any of Claims 1 to 8, characterized in that the silicon carbide used is α-SiC.

10. Sintered body having a resistivity of 0.5 to 10 x cm, obtainable by the process according to any of Claims 1 to 9.

11. Sintered body according to Claim 10 in the form of an electric igniter, an electrically heatable component or a diesel soot filter.

12. Use of the sintered body according to Claim 10 for generating heat by application of an electric potential thereto.

13. Modification of the process according to Claim 1, characterized in that the slip obtained in stage (b) is applied to a sintering-resistant substrate and is dried and the substrate thus coated is sintered as in stage (d).

## Revendications

1. Procédé de fabrication d'un corps fritté conducteur de courant à base de carbure de silicium, dans lequel
(a) on disperse des particules de carbure de silicium, éventuellement traitées au préalable avec un agent de modification de surface, dans un milieu aqueux et/ou organique et on confère aux particules de carbure de silicium une charge superficielle positive ou négative en ajustant la valeur de pH de la dispersion,
(b) on y incorpore comme additifs de frittage de la suie et du carbure de bore, au moins les particules de suie ayant une charge de surface opposée à la charge de surface des particules de carbure de silicium et la totalité ou une partie du carbure de bore pouvant être ajoutée à un moment ultérieur, c'est-à-dire pendant l'étape (c'),
(c) on met la barbotine ainsi obtenue par moulage sous forme de corps vert ou
(c') on convertit la barbotine ainsi obtenue en poudre de frittage et on moule un corps vert à partir de celle-ci, le carbure de bore pouvant être ajouté à cette poudre de frittage, et
(d) on procède au frittage sans pression du corps vert ainsi obtenu,
lequel procédé est caractérisé par le fait que l'étape (d) comprend essentiellement trois étapes consécutives, à savoir (i) un préchauffage à une température comprise entre 1200 - 1900 °C, (ii) un frittage à une température comprise entre 1900 et 2200 °C et (iii) un post-frittage à une température comprise entre 2150 - 1850 °C, suivi d'un refroidissement à la température ambiante, l'étape (i) étant réalisée sous une atmosphère contenant de l'azote, l'étape (ii) dans une atmosphère de gaz rare et l'étape (iii) dans une atmosphère contenant de l'azote et/ou du monoxyde de carbone.

2. Procédé selon la revendication 1, caractérisé par le fait que l'atmosphère de l'étape (i) est constituée d'azote, éventuellement mélangé avec au plus 50 % en volume d'argon.

3. Procédé selon l'une des revendications 1 et 2, caractérisé par le fait que l'atmosphère de l'étape (iii) est constituée d'azote et/ou de monoxyde de carbone, éventuellement mélangés à de l'argon.

4. Procédé selon l'une quelconque des revendications 1 à 3, caractérisé par le fait que l'atmosphère de l'étape (i) est constituée d'azote pur et/ou que l'atmosphère dans l'étape (iii) est constituée d'au moins 50 % en volume d'azote mélangé avec du monoxyde de carbone et/ou de l'argon.

5. Procédé selon l'une quelconque des revendications 1 à 4, caractérisé par le fait que la température dans l'étape (i) est comprise entre 1500 °C et 1850 °C et/ou la température dans l'étape (ii) est comprise entre 1950 °C et 2150 °C et/ou la température de post-frittage dans l'étape (iii) est comprise entre 2000 °C et 2100 °C.

6. Procédé selon l'une quelconque des revendications 1 à 5, caractérisé par le fait que les durées de maintien des températures indiquées des étapes (i) et (iii) sont comprises entre 5 minutes et 24 heures.

7. Procédé selon l'une quelconque des revendications 1 à 6, caractérisé par le fait que l'on utilise dans l'étape (a) des particules de carbure de silicium traitées au préalable avec un agent de modification de surface portant des groupes fonctionnels qui, par ajustement d'une valeur de pH appropriée, peuvent être convertis en des groupes chargés positivement ou négativement.

8. Procédé selon la revendication 7, caractérisé par le fait que l'agent de modification de la surface est choisi parmi les silanes, les chlorures d'acide, les amides d'acides carboxyliques, les anhydrides carboxyliques, les esters d'acides carboxyliques ou les polyélectrolytes organiques.

9. Procédé selon l'une quelconque des revendications 1 à 8, caractérisé par le fait que l'on utilise comme carbure de silicium de l'α-SiC.

10. Corps fritté ayant une résistance spécifique comprise entre 0,5 et 10 Ω x cm, que l'on peut obtenir par un procédé selon l'une quelconque des revendications 1 à 9.

11. Corps fritté selon la revendication 10, sous forme d'une bougie de préchauffage, d'un composant chauffé par des moyens électriques ou d'un filtre à particules d'un moteur diésel.

12. Utilisation d'un corps fritté selon la revendication 10 pour la génération de chaleur par application d'une tension électrique.

13. Variante du procédé selon la revendication 1, caractérisée par le fait que l'on applique la barbotine obtenue dans l'étape (b) sur un substrat résistant au frittage, que l'on sèche et que l'on soumet le substrat ainsi revêtu à un frittage selon l'étape (d).
